(19) Europäisches Patentamt
European Patent Office
Office européen des brevets

(11) Publication number: 0 077 169 B1

# (12) EUROPEAN PATENT SPECIFICATION

(45) Date of publication of patent specification: 21.12.88

(51) Int. Cl.$^4$: H 01 M 10/36, H 01 M 4/58

(21) Application number: 82305293.1

(22) Date of filing: 05.10.82

## (54) Solid-state batteries.

(30) Priority: 08.10.81 JP 161565/81
18.05.82 JP 84218/82

(43) Date of publication of application:
20.04.83 Bulletin 83/16

(45) Publication of the grant of the patent:
21.12.88 Bulletin 88/51

(84) Designated Contracting States:
DE FR GB

(56) References cited:
FR-A-2 243 528
FR-A-2 381 395
FR-A-2 389 245
US-A-3 791 867
US-A-3 988 164
US-A-4 066 824
US-A-4 190 706

CHEMICAL ABSTRACTS, vol. 90, no. 14, April 2, 1979, abstract no. 112134m, page 544, Columbus Ohio (US)

The file contains technical information submitted after the application was filed and not included in this specification

(73) Proprietor: Matsushita Electric Industrial Co., Ltd.
1006, Oaza Kadoma
Kadoma-shi Osaka-fu, 571 (JP)

(72) Inventor: Sekido, Satoshi
53-10, Hashimotokurigatani
Yawata-shi (JP)
Inventor: Sotomura, Tadashi
3-3, Hirano-2-chome
Kashiwara-shi (JP)
Inventor: Ninomiya, Yoshito
9-4, Nasuzukuri-1-chome
Hirakata-shi (JP)

(74) Representative: Newens, Leonard Eric et al
F.J. CLEVELAND & CO. 40/43 Chancery Lane
London WC2A 1JQ (GB)

EP 0 077 169 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to solid-state batteries and, more particularly, relates to secondary batteries having an entirely solid electrolyte.

Most commercial batteries employing a solid electrolyte are primary batteries. These primary batteries generally employ as the solid electrolyte a $Li^+$-ion or $Ag^+$-ion conductive substance. These substances, however, have a disadvantage of forming discharge products of high electric resistance which cause the battery voltage to decline in direct proportion to the amount of discharge. For instance, if an iodine-containing compound is used in the cathode, there is formed LiI or AgI upon discharge.

For example, GB—A—2000898 discloses a solid state primary cell having a lithium anode, a solid iodine containing cathode and interposed therebetween a solid lithium iodide electrolyte doped with 1-alkylpyridinium polyiodide. Generally, the cathode which is a mixture is held in contact with a current collector preferably of carbon or of metal which is inert to the cathode mixture and is highly resistant to corrosion. This battery which is a primary battery can also include a coating on the lithium anode to prevent an increase in the internal resistance of the battery during storage particularly at high temperatures.

Studies have also advanced on lithium secondary batteries employing sulfides or oxides of tetra- to hexa-valent transition metals as cathodes. Most of these lithium batteries, however, employ organic electrolytes, those employing solid electrolytes being very few. In making secondary batteries of the lithium anode type, the most important problem is how to prevent lithium from depositing in mistlike form. In general, when a solid electrolyte is employed in a cell, the mistlike or dendrite metal discharge products presents a more serious problem than in the case of a liquid electrolyte. This problem seems to be a major cause which hinders the rapid commercialization of solid state secondary batteries.

A known solid electrolyte secondary battery is summarised in the precharacterising portion of claim 1 and is also known from US—A—4066824. This document describes a solid-state cell of a secondary battery comprising a cathode of titanium oxide amongst others, an alkaline metal anode, and a solid electrolyte comprising lithium aluminium iodide amongst others.

An object of this invention is to provide a solid electrolyte secondary battery which is made of inexpensive materials and in which the formation of the discharge products having a high electric resistance is eliminated.

The present invention is summarised by the characterising portion of claim 1.

The present invention makes it possible to provide a secondary battery in which the formation of discharge products having a high electric resistance is eliminated by using the aforementioned cathodic active substance which permits the easy interlayer transfer of $Li^+$-ion during the charge and discharge periods and which has increased conductivity resulting from the insertion of these ions, and by using the aforementioned anode in combination with said cathode.

The constructional elements of the present solid electrolyte battery are also entirely of inexpensive solid substances. Consequently, there is no fear of electrolyte leakage, as contrasted with other secondary batteries using a liquid substance. Moreover, it is easy to provide a series arrangement and to reduce the overall thickness of the battery. It is also possible to enclose the battery elements within a photo- or thermo-setting resin by dipping and subsequent curing, as shown in an example of Fig. 2.

In addition during storage any misty deposition of lithium mentioned above occurs only with difficulty so that the battery of the present invention can still withstand repeated charge-discharge cycles.

An example of the present invention will now be described with reference to the accompanying drawings in which:

Fig. 1 is a drawing illustrating the construction of a battery embodying the present invention in which the collector metal serves also as a battery case and a terminal.

Fig. 2 is a drawing illustrating the construction of a battery embodying the present invention in which the battery elements are enclosed within a photo- or thermo-setting resin according to this invention.

Fig. 3 is a graph representing the relationship between the type of cathodic substance and the discharge potential in a battery embodying the present invention.

Fig. 4 is a graph representing the effect of the type of cathodic substance on the relationship between the discharge current density and the flat voltage in a battery embodying the present invention.

Fig. 5 is a graph representing the change in discharge capacity accompanying the repeated charge-discharge cycles in a battery embodying the present invention.

Fig. 6 is a graph representing the effect of the collector material as well as the anode material on the self-discharge ratio in a battery embodying the present invention.

Figures 1 and 2 show the batteries in a series arrangement of cells. A single cell structure is, of course, possible. Fig. 1 shows a construction in which the collector metal serves also as the battery case and a terminal. Fig. 2 shows another construction in which the battery is enclosed with a photo- or thermo-setting resin. Referring to figures 1 and 2, a cathodic active substance 1 is made of a molded mixture of a solid electrolyte with 70 to 90% of a sulfide or oxide of Ti, Nb, W, or Mo. A press-molded solid electrolyte 2 comprises a highly $Li^+$-ion conductive substance

nLiI. 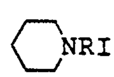

(a double salt of lithium iodide and a n-alkylpyridinium iodide, R being an n-alkyl group). A reversible metal anode 3 comprises a sheet of lithium-aluminium alloy or a molded mixture thereof with an electrolyte. A cathode collector 4 comprises a highly anticorrosive stainless steel of the ferrite type containing 30% or more of chromium; carbon, gold, palladium or platinum. In the examples shown in Figs. 1 and 2, a conductive graphite paint is used to serve both as the cathode collector and the binder between each cell. In the example of Fig. 1, the cathode collector only for the end cell is a high-chrome stainless steel which serves as both the battery cap and the cathode terminal. In the example of Fig. 2, collector *4'* consists of a conductive graphite paint or a stainless steel screen which is pressed against the surface of the cathodic active substance *1* and is used as the end of the cell. *6* is a copper anode collector provided on the anodic substance *3* by vacuum deposition, spattering, or flame spraving. In the example shown in Fig. 1, a copper anode collector *7* for the end cell (the cell at the lowest position) is used to serve as both the battery cap and the terminal. *8* is a packing material used only in the example of Fig. 1 for the purpose of insulating the cathode from the anode and enclosing the battery elements in the case. *9* and *10* used in the example of Fig. 2 are lead wires electrically connected to cathode collector *4'*, and anode collector *6*, respectively. *11* is an outside layer of a photo- or thermo-setting resin. Both Figs. 1 and 2 are examples in which three cells are connected in series.

One of the examples in which a $Li^+$-ion conductive electrolyte is employed is shown below. The electrolyte

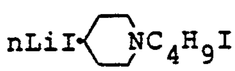

is formed by the contact between the cathodic active substance and the anode metal sheet. However, it is of course possible to construct a battery by separately preparing the electrolyte, disposing a layer of the resulting electrolyte between the layers of cathodic and anodic active substances, and subjecting the assembly to press-molding.

The cathodic active substance was prepared by press-molding 3 mmol of $TiS_2$, $Nb_2S_5$, $WS_3$, $TiO_2$, $Nb_2O_5$, or $WO_3$ into a disc of 18 mm in diameter under a pressure of 300 MPa (megapascal). The disc was coated, on the side counter to the anode, with a complex,

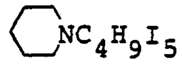

(liquid), formed by the addition of iodine to n-butylpyridinium iodide. The coated side was pressure-welded to the Li—Al alloy sheet to obtain a single cell of the construction type of Fig. 1. For comparison, a reference cell of the conventional type (comparative example) closely resembling the above cell was prepared by molding a mixture of 1/8 mmol of a complex,

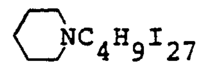

formed by the addition of iodine, and 20% of silica gel to obtain a molded cathode, and jointing the molded cathode to a lithium anode by pressure welding.

The performance characteristics of each single cell were as shown in Figs. 3 to 5. In the figures, the Arabic numerals refer to sulfides or oxides in the following way: 1 $TiS_2$, 1' $TiO_2$, 2 $Nb_2S_5$, 2' $Nb_2O_5$, 3 $WS_3$, 3' $WO_3$, 5 the conventional-type cell. Fig. 3 shows the change in voltage when the cell is discharged at 30 uA. Fig. 4 shows the relationship between the discharge current density and the flat voltage. Fig. 5 shows the change in discharge capacity with the increase in the number of charge-discharge cycles when the cell is discharged to 1 V at 30 uA and charged to 3 V at the same amperage.

From Figs. 3 and 4, it is seen that the conventional cell shows a large voltage change with the discharge, the change being in direct proportion to the amount of discharged electricity and the discharge current density, indicating clearly that the discharge voltage is controlled by the electric resistance of the discharge products, whereas the cell of this invention showed better flatness of the voltage change. Even in the cell of this invention a critical current density was observed at about 500 uA/cm. This seems to be originated from a low ionic conductivity of the electrolyte, i.e. $10^{-5}$—$10^{-4}$ S/cm. If an electrolyte of high conductivity is used, the critical current density will become larger. When a sulfide was used in the cathodic active substance, the charge and discharge polarization was small, because as compared with the case of oxide, the interlayer transfer of $Li^+$-ion is easier in the case of sulfide. In any event, it was found that the present cell withstands about 300 cycles of charge and discharge.

In the above Example, a high-chrome stainless steel was used as the cathode collector and a lithium-aluminium alloy (10 atom % of Al) was used as the anode. In the present Example, the effect of the cathode collector material and that of the anode material were examined.

In a manner similar to that in the above Example a number of single cells were prepared by using 3 mmol of $TiS_2$ as cathode substance and various types of cathode collector materials shown in Fig. 6. Another cell of the conventional type was prepared by using a cathode collector of high-chrome stainless steel and a lithium anode.

The effect of the material of the cathode collector was most markedly manifested on the self-discharge ratio among the performance characteristics, as shown in Fig. 6. The self-discharge ratio was determined after the cell had been left standing at 70°C for one month. Among the collector materials, high-chrome stainless steel, graphite paste, platinum, palladium, and gold showed a small self-discharge ratio of 1% or less. When used as anode, lithium showed apparently a larger self-discharge ratio. This is due to the

partial short circuit caused by the misty deposition of lithium which took place during the first charge after the determination of initial discharge capacity.

It was found that in a cell employing a lithium-aluminium alloy (10 atom % of aluminium), such a phenomenon is difficult to take place and, hence, the cell withstands the repeated charge-discharge cycles as shown in Fig. 5.

**Claims**

1. A solid electrolyte secondary battery having a cathode comprising a solid Li ion conductive electrolyte and one member selected from the group of compounds consisting of chemical formulas $TiX_2$, $Nb_2X_5$, $WX_3$ and $MoX_3$ (wherein X is an oxygen atom or sulfur atom), a cathode current collector, a lithium alloy anode and a $Li^+$-ion conductive solid electrolyte, characterized in that the anode comprises a lithium-aluminium alloy, and the cathode current collector comprises at least one member from the group consisting of ferrite-type stainless steel of 30% or higher in chromium content, carbon, gold, platinum and palladium.

2. A battery as claimed in claim 1 wherein the electrolyte comprises a complex comprising n-alkylpyridinium polyiodide.

**Patentansprüche**

1. Festelektrolyt-Sekundärbatterie mit einer Kathode, die einen mit einer Kathode, die einen $Li^+$-Ionen leitenden Festelektrolyten und ein aus der Gruppe von gemäß den chemischen Formeln $TiX_2$, $Nb_2X_5$, $WX_3$ und $MoX_3$ (wobei X ein Sauerstoffatom oder Schwefelatom ist) gebildeten Verbindungen gewähltes Mitglied aufweist, einem Kathodenstromkollektor, einer Lithiumlegierungs-Anode und einem $Li^+$-Ionen leitenden Festelektrolyten, dadurch gekennzeichnet, daß die Anode eine Lithium-Aluminium-Legierung aufweist und der Kathodenstromkollektor mindestens ein Mitglied aus der aus Ferrit-Typ-Edelstahl mit einem Gehalt von 30% oder höher an Chrom, Kohlenstoff, Gold, Platin und Palladium bestehenden Gruppe aufweist.

2. Batterie nach Anspruch 1, bei der der Elektrolyt einen n-Alkylpyridinium Polyjodid aufweisenden Komplex aufweist.

**Revendications**

1. Pile secondaire à électrolyte solide, ayant une cathode comprenant un électrolyte conducteur solide à ions $Li^+$ et un membre choisi dans le groupe de composés répondant aux formules chimiques $TiX_2$, $Nb_2X_5$, $WX_3$ et $MoX_3$ (dans lesquelles X est un atome d'oxygène ou de soufre), un collecteur de courant cathodique, une anode en alliage de lithium et un électrolyte solide conducteur à ions $Li^+$, caractérisé en ce que l'anode comprend un alliage lithium-aluminium, et le collecteur de courant cathodique comprend au moins un membre du groupe consistant en acier inoxydable du type ferrite à au moins 30% de chrome, carbone, or, platine et palladium.

2. Pile suivant la revendication 1, dans laquelle l'électrolyte comprend un complexe comprenant du polyiodure de n-alkylpyridium.

FIG.1

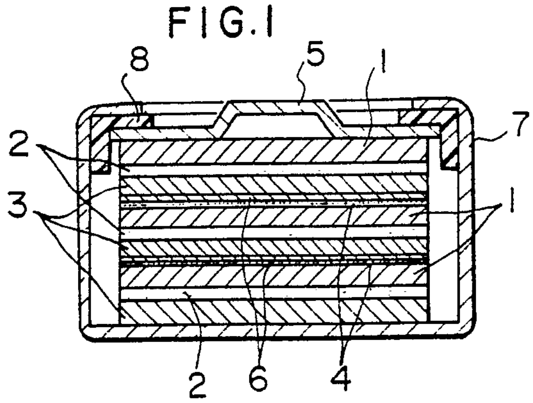


FIG.2

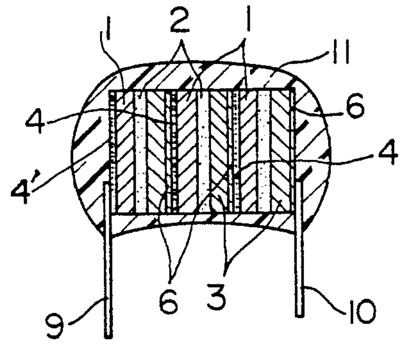


FIG.3

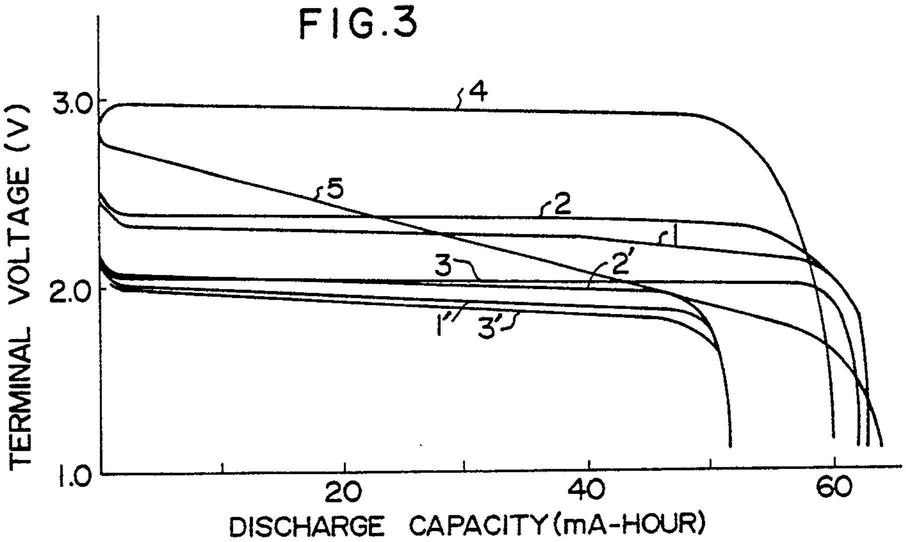

FIG.4

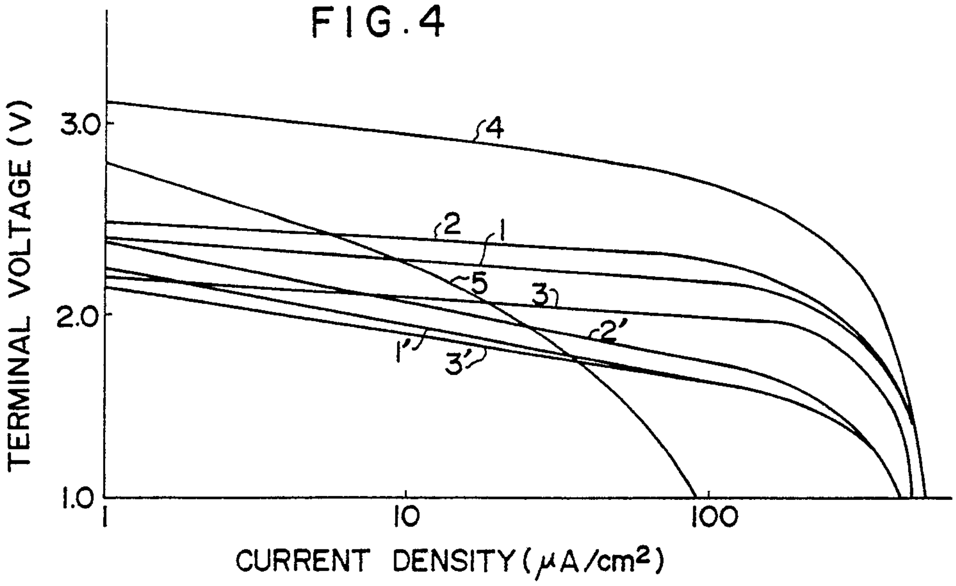
TERMINAL VOLTAGE (V)
3.0
2.0
1.0
1
10
100
CURRENT DENSITY (μA/cm²)
4
2
1
5
3
2'
1'
3'

FIG.5

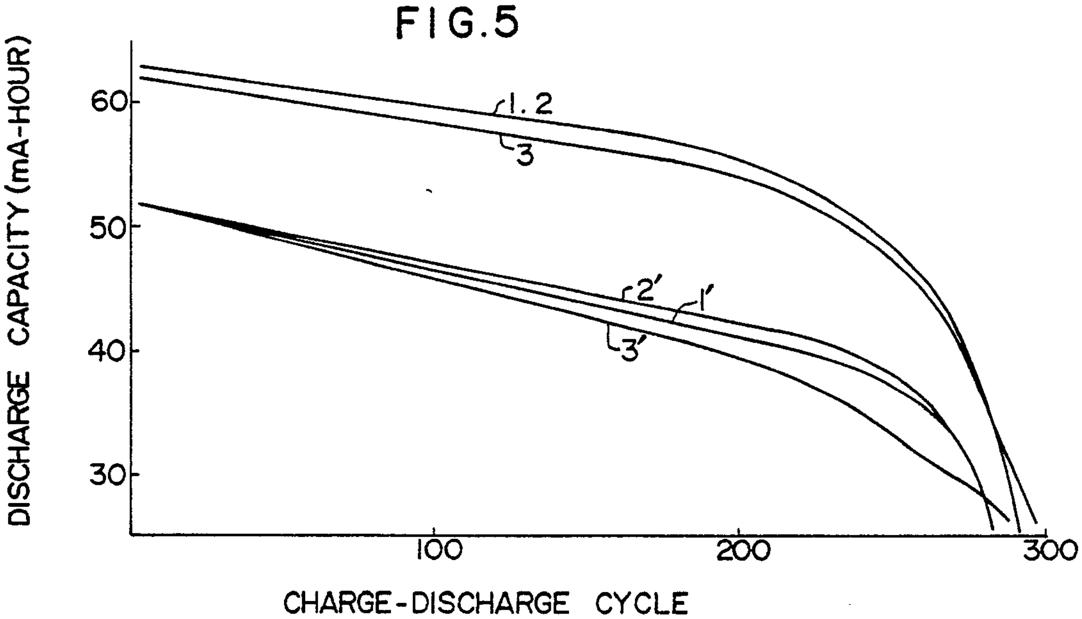
DISCHARGE CAPACITY (mA-HOUR)
60
50
40
30
100
200
300
CHARGE-DISCHARGE CYCLE
1. 2
3
2'
1'
3'

FIG.6

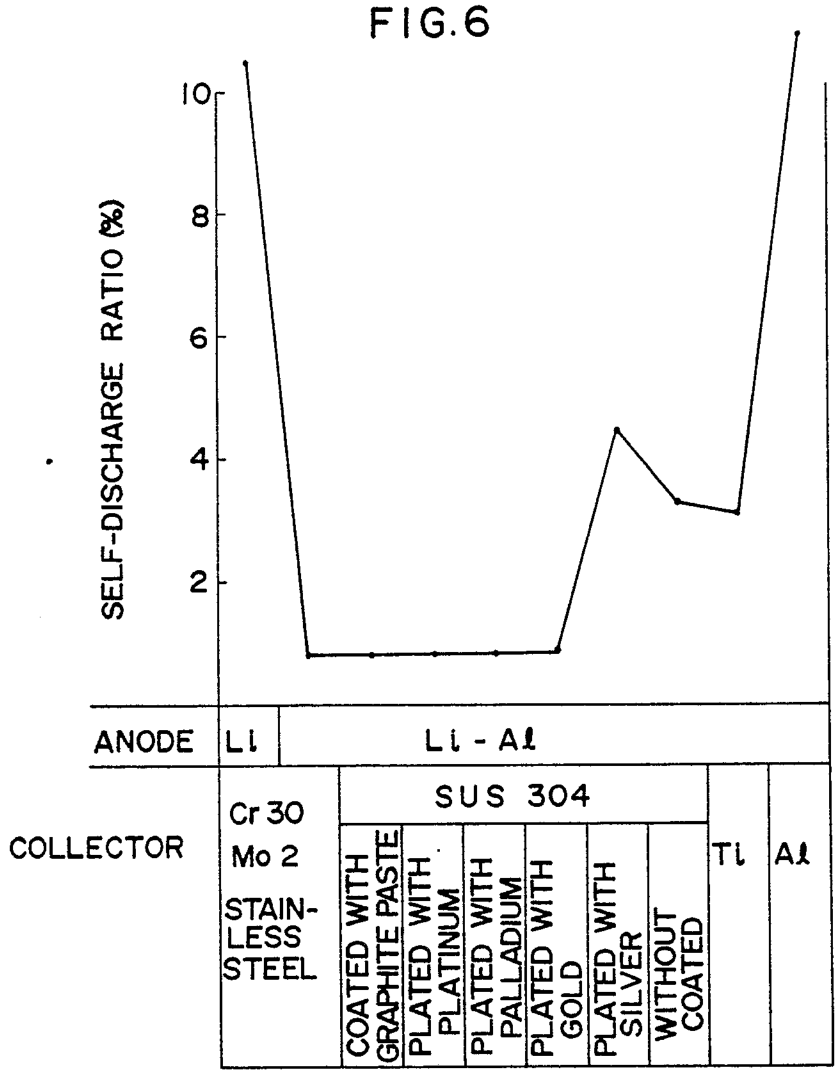
SELF-DISCHARGE RATIO (%)
10
8
6
4
2
ANODE
Li
Li - Al
COLLECTOR
Cr 30
Mo 2
STAIN-
LESS
STEEL
SUS 304
COATED WITH GRAPHITE PASTE
PLATED WITH PLATINUM
PLATED WITH PALLADIUM
PLATED WITH GOLD
PLATED WITH SILVER
WITHOUT COATED
Ti
Al